## Europäisches Patentamt

(19) **European Patent Office**

**Office européen des brevets**

(11) Publication number: **0 293 072 B1**

(12) # EUROPEAN PATENT SPECIFICATION

(45) Date of publication of the patent specification:
**27.12.90**

(51) Int. Cl.⁵: **A47C 7/24**

(21) Application number: **88303087.6**

(22) Date of filing: **07.04.88**

---

(54) Seat construction.

---

(30) Priority: **22.05.87 US 53185**

(43) Date of publication of application:
**30.11.88 Bulletin 88/48**

(45) Publication of the grant of the patent:
**27.12.90 Bulletin 90/52**

(84) Designated Contracting States:
**BE DE ES FR GB IT SE**

(56) References cited:
**EP-A- 0 224 974**
**US-A- 4 325 542**
**US-A- 4 407 492**

(73) Proprietor: **WICKES MANUFACTURING COMPANY,
26261 Evergreen Road, Southfield Michigan 48076(US)**

(72) Inventor: **Cojocari, Brian S., 700 North Cross Creek
Circle, Walnut California(US)**
Inventor: **Shivers, Joseph R., 39935 Whispering Lane,
Novi Michigan(US)**

(74) Representative: **Sommerville, John Henry et al,
SOMMERVILLE & RUSHTON 11 Holywell Hill, St. Albans
Hertfordshire, AL1 1EZ(GB)**

---

## Description

### BACKGROUND OF THE INVENTION

#### 1. Field of the Invention.

The field of the invention relates to seat constructions for motor vehicle seats and the like.

#### 2. Brief Description of the Prior Art.

Supporting spring structures for seating assemblies have commonly included load-bearing wires supported by spring elements or the like. US-A 3 639 002, which is incorporated by reference herein, discloses such a structure. A plurality of transversely extending stringer wires are each double wrapped about a pair of parallel, longitudinally extending bolster wires. Free ends of the transversely extendding wires extend beyond the longitudinal wires at an angle with respect to the plane defined thereby. An additional wire connects the free ends. The entire assembly may be supported by a cantilevered spring structure and embedded in foam.

US-A 2 934 133, 3 248 745 and 4 325 542 are representative of other spring seat constructions known to the art. The construction disclosed in the latter patent has the advantage of inherently retaining its assembly to a seat frame without requiring additional components for installation or support. However, as with US-A 4 325 542 discussed above, it has two parallel bolster wires, around which each stringer wire is double wrapped.

### SUMMARY OF THE INVENTION

An object of the invention is to provide a self-supporting and resilient seat suspension system which has only one bolster wire to enable it to be easily installed on a flat mounting surface, and which is stable in all types of seat frames.

According to the invention, such a system is comprising a generally rectangular wire frame, first and second substantially parallel border wires secured, respectively, to opposite sides of said wire frame, a plurality of substantially parallel stringer wires extending between and secured to said border wires, a bolster wire extending substantially parallel to and above a plane defined by said first and second border wire, each of said stringer wires being wrapped about said bolster wire to divide the stringer wires into pairs of legs such that each pair of legs defines an acute angle, said bolster wire being substantially closer to said second border wire than said first border wire, said stringer wires extending between said bolster wire and said second border wire defining a leg portion of said suspension system, and said stringer wires extending between said bolster wire and said first border wire defining a seat supporting portion.

### BRIEF DESCRIPTION OF THE DRAWINGS

Fig. 1 is a partially cutaway perspective view of a seat construction including a suspension system according to the invention; and

Fig. 2 is a perspective view of the suspension system partially shown in Fig. 1.

### DETAILED DESCRIPTION OF THE INVENTION

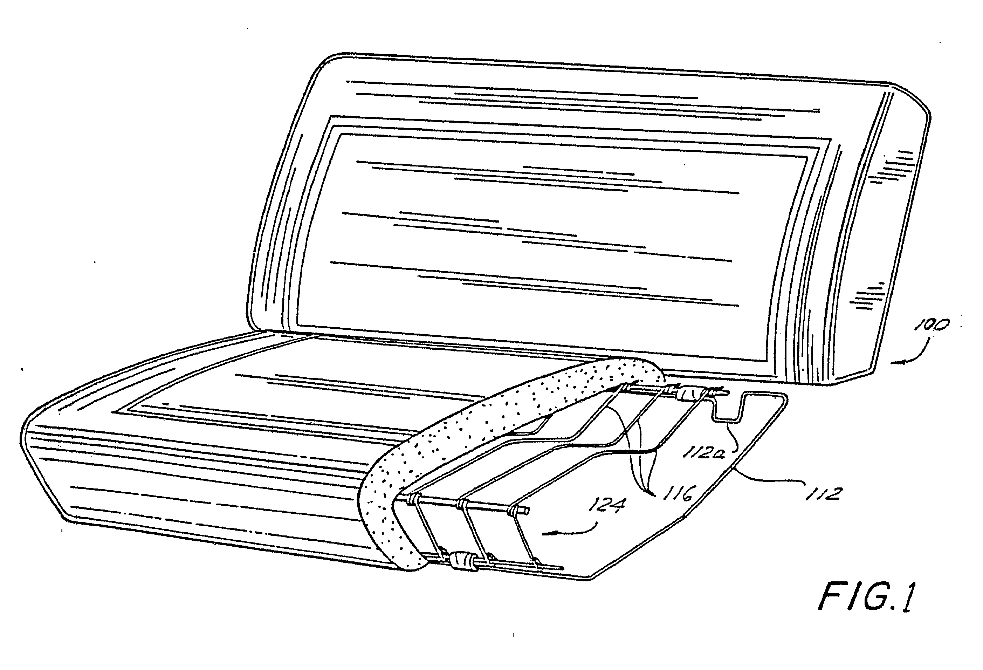

Fig. 1 illustrates a bench type motor vehicle seat construction 100 which includes a self-contained and self-supporting suspension system 110 as discussed hereinafter.

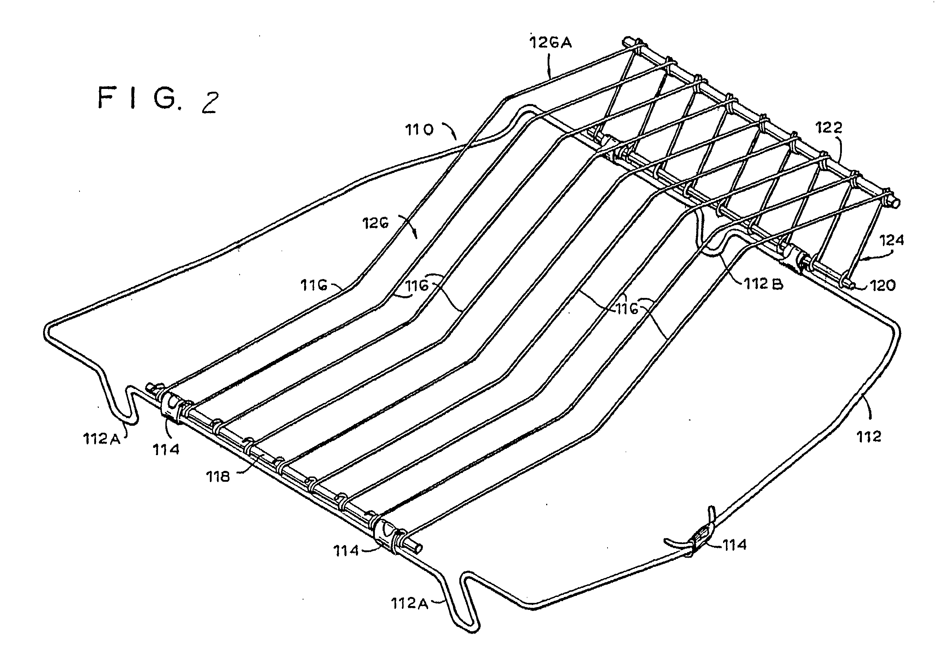

Fig. 2 illustrates the wire frame suspension system 110 for the rear seat of a motor vehicle. The system includes a substantially rectangular wire frame 112, the ends of which are bent inwardly and secured by a clamp 114. Two generally U-shaped rear feet 112A and one generally U-shaped front foot 112B are defined by the frame 112. Each foot may be secured to the floor of the motor vehicle.

A plurality of thirteen gauge stringer wires 116 extend longitudinally with respect to the wire frame 112 and are substantially parallel to each other. They are equally spaced about one to two and one-half inches (63 mm) apart. The wires are contoured to provide adequate support for a person's thighs. A first border wire 118 is secured to the rear end of the frame 112 by a pair of clamps 114. A second border wire 120 is clamped to the front end of the frame 112. A bolster wire 122 is positioned above and parallel to the second bolster wire 120. Each border and bolster wire is constructed from twelve gauge (2.68 mm), oil-tempered wire encapsulated by an extruded coating of high density polyethylene. The stringer wires are double wrapped about the first border wire and the bolster wire and single wrapped about the second border wire. The second border wire and the bolster wire are positioned such that the front leg portion 124 defined by the stringer wires 112 extends at an acute angle with respect to the stringer wires defining the thigh supporting portion 126A of the upper surface 126 of the suspension system 110. This provides the necessary resilience at the front end of the vehicle seat.

Because the system 110 is intended to be self-supporting, the stringer wires 116 are constructed from thirteen gauge wires (ASTM standards) (2.32 mm) to provide the required stability and resilience. Fourteen gauge wires (2.03 mm), as employed in the construction disclosed in U.S. Patent No. 3 639 002, fail to provide adequate support. Twelve gauge wire (2.68 mm) is too stiff for the intended application and could possibly be felt through the seat in the absence of an insulator. Since an object of the invention is to provide seating comfort while also minimizing the number of parts, the weight, and the cast of the seat construction, stringer wires much heavier than thirteen gauge (2.32 mm) would not be suitable. The border and bolster wires are each made from twelve gauge wire (2.68 mm). The plastic coating about the bolster wire and the first border wire 118 is considerably thicker than that about the border wires due to the relatively wide double wrapping of the stringer wires thereabout. A coating of about 0.07 inches (2 mm) has been successfully employed.

Since the system must be able to support considerable weight and pass rigorous cycle testing involving repeated applications of a load, it is important for the areas subject to the most stress to be sufficiently durable. The double wrapping of the stringer wires about the bolster wire is sufficiently wide that it has such durability. In a preferred embodiment of the invention, the outside diameter of the wrapping was 0.43 inches (11 mm). This is substantially wider than the 0.32 inch (8 mm) wrapping in structures as shown in the aforementioned U.S. Patent No. 3 639 002. Tests indicated the tighter wrapping would result in snapped stringer wires after repeated load applications. Using the preferred thirteen gauge (2.32 mm) wires, the outside diameter of the double wrappings about the bolster wire should be at least about 0.37 inches (9 mm). The coated bolster wire has a sufficient diameter that the stringer wires are wrapped fairly snugly thereabout.

It will be appreciated by those skilled in the art that the suspension system provided herein has many applications and can be adapted for use in many types of vehicle seats. While neither twelve (2.68 mm) nor fourteen gauge (2.03 mm) wire has been found to be suitable for the system, the wire may be somewhat lighter or heavier than thirteen gauge (2.32 mm) and still provide adequate performance. It would also be possible to include, in alternating sequence or otherwise, stringer wires of various gauges with the preferred thirteen gauge (2.32 mm) wire.

## Claims

1. A self-contained, self-supporting and resilient suspension system (110) for a seat construction comprising:
a generally rectangular wire frame (112); first and second substantially parallel border wires (118, 120) secured, respectively, to opposite sides of said wire frame; a plurality of substantially parallel stringer wires (116) extending between and secured to said border wires a bolster wire (122) extending substantially parallel to and above a plane defined by said first and second border wires, each of said stringer wires being wrapped about said bolster wire to divide the stringer wires into pairs of legs (124, 126A) such that each pair of legs defines an acute angle, said bolster wire being substantially closer to said second border wire (120) than said first border wire (118); said stringer wires extending between said bolster wire and said second border wire (120) defining a leg portion (124) of said suspension system; and said stringer wires extending between said bolster wire and said first border wire (118) defining a seat supporting portion.

2. A system as defined in claim 1 characterized in that said wire frame (112) includes an integrally formed, generally U-shaped foot (112A or 112B) extending beneath one of said first and second border wires (118, 120).

3. A system as defined in claim 2 characterized in that said wire frame (112) includes an integrally formed, generally U-shaped foot (112A, 112B) extending beneath each of said first and second border wires (118, 120).

4. A system as defined in claim 1, 2 or 3 characterized in that each of said stringer wires (116) is double wrapped about said bolster wire (122).

5. A system as defined in claim 1, 2, 3 or 4 characterized in that each of said stringer wires (116) is double wrapped about said first border wire (118).

6. A system as defined in claim 5 wherein each of said stringer wires (116) is single wrapped about said second border wire (120).

## Patentansprüche

1. In sich geschlossenes, selbsttragendes und elastisches Aufhängungssstem (110) für einen Sitz mit:
einem im allgemienen rechtwinkligen Drahtrahmen (112);
ersten und zweiten im wesentlichen parallelen Begrenzungsdrähten (118, 120), die jeweils an entgegengesetzten Seiten des Drahtrahmens gesichert sind;
einer Vielzahl von im wesentlichen parallelen Stringerdrähten (116), die sich zwischen den Begrenzungsdrähten erstrecken und daran sicher befestigt sind;
einem Polsterdraht (122), der sich im wesentlichen parallel zu und über der Ebene erstreckt, die durch die ersten und zweiten Begrenzungsdrähte bezeichnet ist, wobei jeder der Stringerdrähte über den Polsterdraht gewickelt ist, um die Stringerdrähte in Schenkelpaare (124, 126A) zu trennen, so daß jedes Paar Schenkel einen spitzen Winkel ergibt, wobei der Polsterdraht im wesentlichen näher zu dem zweiten Einfassungsdraht (120) als zu dem ersten Einfassungsdraht (118) ist;
wobei die Stringerdrähte sich zwischen dem Polsterdraht und dem zweiten Einfassungsdraht (120) erstrecken und einen Schenkelabschnitt (124) des Aufhängungssystemes bilden; und wobei sich die Stringerdrähte zwischen dem Polsterdraht und dem ersten Einfassungsdraht (118) erstrecken und einen Sitztrageabschnitt bilden.

2. System nach Anspruch 1, dadurch gekennzeichnet, daß der Drahtrahmen (112) einen integral gebildeten im wesentlichen U-förmigen Fuß (112A oder 112B) enthält, der sich unterhalb eines des ersten oder zweiten Begrenzungsdrahtes (118, 120) erstreckt.

3. System nach Anspruch 2, dadurch gekennzeichnet, daß der Drahtrahmen (112) einen integral gebildeten im wesentlichen U-förmigen Fuß (112A, 112B) enthält, der sich unterhalb jedem der ersten und zweiten Begrenzungsdrähte (118, 120) erstreckt.

4. System nach einem der Ansprüche 1, 2 oder 3, dadurch gekennzeichnet, daß jeder der Stringerdrähte (116) über den Polsterdraht (122) doppelt gewickelt ist.

5. System nach einem der Ansprüche 1, 2, 3 oder 4, dadurch gekennzeichnet, daß jeder der Stringerdrähte (116) über den ersten Begrenzungsdraht (118) doppelt gewickelt ist.

6. System nach Anspruch 5, wobei jeder der Stringerdrähte (116) um den zweiten Einfassungsdraht (120) einfach gewickelt ist.

## Revendications

1. Dispositif de suspension (110) intégré, autoporteur et élastique pour une construction de siège, comprenant: un châssis (112) à forme générale rectangulaire, en fil métallique; un premier et un second fil métallique de bord (118, 120), qui sont sensiblement parallèles et sont fixés respectivement à des côtés opposés dudit châssis; une série de fils métalliques longitudinaux (116) sensiblement parallèles, s'étendant entre lesdits fils de bord et fixés à eux; un fil métallique transversal (122) s'étendant sensiblement parallèlement à et au-dessus d'un plan défini par le premier et le second fil de bord, chacun des fils longitudinaux étant enroulé autour du fil transversal de façon que celui-ci divise les fils longitudinaux en deux branches (124, 126A) formant entre elles un angle aigu, ledit fil transversal étant sensiblement plus proche du second fil de bord (120) que du premier (118); lesdits fils longitudinaux formant, entre le fil transversal et le second fil de bord (120), un jambage (124) du dispositif de suspension; et lesdits fils longitudinaux formant, entre le fil transversal et le premier fil de bord (118), une partie de support du siège.

2. Dispositif selon la revendication 1, caractérisé en ce que le châssis en fil métallique (112) comporte un pied intégré (112A ou 112B) en forme générale de U, s'étendant en dessous de l'un des premier et second fils de bord (118, 120).

3. Dispositif selon la revendication 2, caractérisé en ce que le châssis en fil métallique (112) comporte un pied intégré (112A ou 112B) en forme générale de U, s'étendant en dessous de chacun des premier et second fils de bord ( 118, 120).

4. Dispositif selon la revendication 1, 2 ou 3, caractérisé en ce que chacun des fils longitudinaux (116) est enroulé à double tour autour du fil transversal (122).

5. Dispositif selon la revendication 1, 2, 3 ou 4, caractérisé en ce que chacun des fils longitudinaux (116) est enroulé à double tour autour du premier fil de bord (118).

6. Dispositif selon la revendication 5, caractérisé en ce que chacun des fils longitudinaux (116) est enroulé; sur un seul tour autour du second fil de bord (120).

100

112

112a

116

124

*FIG.1*

FIG. 2

EP 0 293 072 B1